# EUROPEAN PATENT APPLICATION

(11) **EP 4 704 425 A1**
(43) Date of publication of application: **04.03.2026**
(21) Application number: 25196918.4
(22) Date of filing: 20.08.2025
(51) Int. Cl.: H04N 21/24, H04N 21/442

(54) **VIDEO IMAGE TRANSMISSION APPARATUS, VIDEO IMAGE TRANSMISSION METHOD, AND COMPUTER PROGRAM**

(30) Priority: 27.08.2024 JP 2024145596
(71) Applicant: CANON KABUSHIKI KAISHA, Ohta-ku Tokyo 146-8501 (JP)
(72) Inventor: HATAZAKI, Sho, Tokyo, 146-8501 (JP)
(74) Representative: TBK

(57) **Abstract**

A video image transmission apparatus has a transmission means for transmitting video image data to an external device via a network; a determination means for determining a load level to the network during communication with the external apparatus; a decision means for deciding at least one from among a re-connection time period, a re-connection interval and the number of times that re-connections will be performed, based on the load level from the time of the disconnection; and a control means for transmitting a re-connection request to the external apparatus based on the at least one.

## Description

### TECHNICAL FIELD

The present disclosure relates to a video image transmission apparatus, a video image transmission method, a computer program, and the like.

### BACKGROUND

When streaming a video image in real time between a client and a server via a network, there are disruptions such as the bandwidth of the network being limited due to usage of the same network by an unspecified large number of users, and the like, the stream being stopped due to the occurrence of packet loss, and the like. At this time, there are cases in which it is determined that the server side is not able to normally continue the stream, and the connection is cut off.

In this context, it is possible to automatically perform connection from the client to the server after the connection is cut off, and to reconnect thereto. In Japanese Unexamined Patent Application, First Publication No. H11-275110, when a disconnection has occurred during wireless data communications due to a deterioration of the electric field strength of the wireless circuit, control is performed to automatically perform re-connection.

However, when a message that the connection has been disconnected is received from the server, the client is not able to identify whether the cause was that the user performed a stopping operation on the UI for the server in order to end the stream, or whether the cause was that the network load increased and the server disconnected.

Therefore, the client continuously sends re-connection requests to the server even when the user has intentionally disconnected the stream and has performed a stopping operation from the UI of the server. At this time, each time the server receives a re-connection request, it returns an error response (ICMP port unreachable) at the IP level, and this creates a load on the server.

In addition, in a case in which the network load has increased and the stream has been disconnected, if the period of time during which re-connection is performed is too short, there is a chance that connection will not be possible. However, the period of time during which the client sends a re-connection request is fixed.

Therefore, there is the problem that when the client has detected disconnection from the server, a load is placed on the server by the client sending re-connection requests to the server at a predetermined interval, as well as the problem that the re-connection requests are only sent over a short period of time, and the client is unable to connect to the server.

### SUMMARY

The present disclosure provides a video image transmission apparatus having a transmission means for transmitting video image data to an external device via a network; a determination means for determining a load level to the network during communication with the external apparatus; a decision means for deciding at least one from among a re-connection time period, a re-connection interval and the number of times that re-connections will be performed, based on the load level from the time of the disconnection; and a control means for transmitting a re-connection request to the external apparatus based on the at least one.

Further features of the present disclosure will become apparent from the following description of embodiments with reference to the attached drawings.

### BRIEF DESCRIPTION OF THE DRAWINGS

FIG. 1 is a diagram showing a network configuration example according to the First Embodiment of the present disclosure.
FIG. 2 is a functional block diagram showing an internal configuration example for a camera 1000 according to the First Embodiment of the present disclosure.
FIG. 3 is a functional block diagram showing an internal configuration example of a server apparatus 2000 according to the First Embodiment of the present disclosure.
FIG. 4 is a flowchart showing an example of automatic re-connection processing using packet loss during video image transmission according to the First Embodiment of the present disclosure.
FIG. 5 is a flowchart showing an example of decision processing for a time period during which re-connection requests will be transmitted using packet loss, and the like, during step S4004.
FIG. 6 is a flowchart showing an example of automatic re-connection processing using an estimated bandwidth during video image transmission for a camera 1000 according to a Second Embodiment of the present disclosure.
FIG. 7 is a flowchart showing an example of decision processing for a period of time during which a re-connection request is transmitted using an estimated bandwidth according to the Second Embodiment of the present disclosure.
FIG. 8 is a flowchart showing an example of automatic re-connection processing using ACK, NAK received from the server according to the Second Embodiment of the present disclosure.

### DESCRIPTION OF THE EMBODIMENTS

Hereinafter, with reference to the accompanying drawings, favorable modes of the present disclosure will be described using Embodiments. In each diagram, the same reference signs are applied to the same members or elements, and duplicate description will be omitted or simplified.

### <First Embodiment>

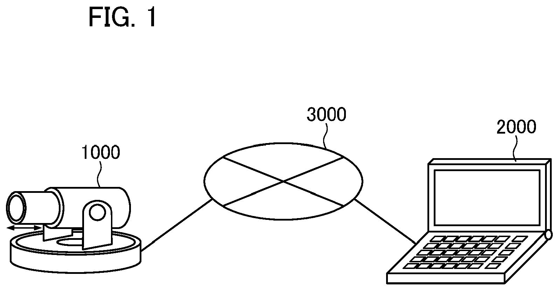

A description will be given below of the video transmissions apparatus according to the First Embodiment of the present disclosure with reference to FIGS. 1 to 5. FIG. 1 is a diagram showing a network configuration example according to the First Embodiment of the present disclosure.

The system according to the present embodiment is configured by a camera 1000, a server apparatus 2000, a network 3000, and the like. The camera 1000 is able to transmit video image data to the server apparatus 2000 via the network 3000, and functions as a video image transmission apparatus.

Note that the configurational diagram shown in in FIG. 1 explains an example of the information processing apparatus according to the present disclosure, and the present disclosure is not limited thereto, and various changes or variations are possible within the scope of the gist thereof. For example, although the camera 1000 is given as an example of the video image transmission apparatus, this is not limited to a camera, and for example, may also be a video image recording reproducing apparatus, a server, or the like as long as this is a device that is able to transmit video image data via a network.

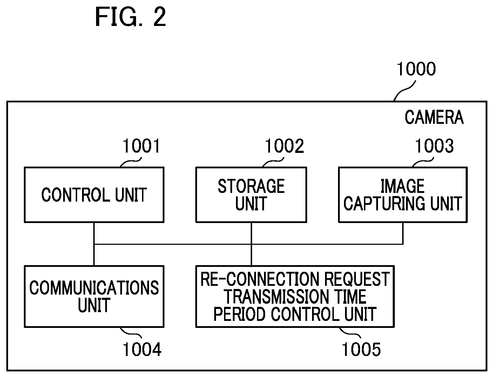

FIG. 2 is a functional block diagram showing an internal configuration example of the camera 1000 according to the First Embodiment of the present disclosure. Note that a portion of the functional blocks that are shown in FIG. 2 are realized by a CPU and the like that serves as a computer that is included in the camera 1000 executing a computer program that has been stored on a memory that serves as a storage medium.

However, a portion or the entirety thereof may also be made so as to be realized by hardware. As this hardware, a dedicated circuit (ASIC), a processor (reconfigurable processor, DSP), and the like may be used.

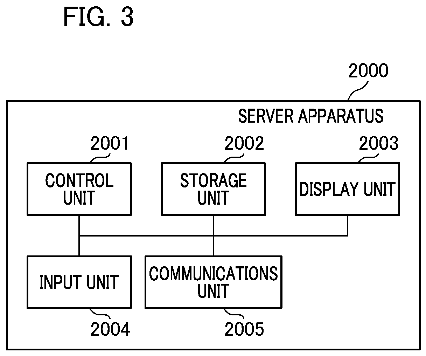

In addition, each of the functional blocks that is shown in FIG. 2 does not need to be housed in the same body, and may also be configured by separate devices that are connected to each other by signal paths. Note that the above description in relation to FIG. 2 also applies to the server apparatus that is shown in FIG. 3.

In FIG. 2, the numeral 1001 is a control unit. The control unit 1001 houses a CPU and the like that serves as a computer, and controls the operations of each unit of the entirety of the apparatus based on a computer program that has been stored on a storage unit 1002 (memory) that serves as a storage medium.

The numeral 1002 is a storage unit. The storage unit 1002 is primarily used as a storage region for various types of data, such as a storage region for computer programs that are executed by the control unit 1001, a work region for when the computer programs are being executed, and the like.

The numeral 1003 is an image capturing unit. The image capturing unit 1003 includes, for example, a CMOS image sensor and the like, converts an analog signal that has been acquired by capturing an image of a subject to a digital signal, and outputs the digital signal to the storage unit 1002 as a captured image.

The numeral 1004 is a communications unit. The communications unit 1004 uses a video image transmission protocol SRT (Secure Reliable Transport), and transmits video image data and each setting value to the server apparatus 2000 via the network 3000. Note that although the communications unit 1004 uses SRT as the video image transmission protocol, the video image transmission protocol is not limited thereto.

In addition, when transmitting each setting value, confirmation responses, and the like, the communications unit 1004 uses measurements of the communication information such as packet loss, an estimated bandwidth, ACK, NAK, and the like.

The numeral 1005 is a re-connection request transmission time period control unit. When re-connection request data is being transmitted to the server apparatus 2000, the re-connection request transmission time period control unit 1005 performs control of the transmission time period and the like of the re-connection request based on communication information that has been obtained by the communications unit 1004. That is, it becomes such that until this time period has elapsed, re-connection requests are continuously transmitted at a predetermined interval.

FIG. 3 is a functional block diagram showing an internal configuration example of the server apparatus 2000 according to the First Embodiment of the present disclosure.

The numeral 2001 is a control unit. The control unit 2001 houses a CPU and the like that serves as a computer, and controls the operations of each unit of the entirety of the server apparatus based on a computer program that has been stored on a storage unit 2002 (memory) serving as a storage medium.

The numeral 2002 is a storage unit. The storage unit 2002 is primarily used as a storage region for various data, such as a storage region for computer programs that are executed by the control unit 2001, a work region for when the computer program is being executed, and the like.

The numeral 2003 is an output unit. The output unit 2003 is configured by, for example, an LCD, an organic EL display, and the like, and outputs various setting screens, a viewer for a video image that is received from the camera 1000, and the like to the user of the server apparatus 2000.

The numeral 2004 is an input unit. The input unit 2004 is configured by a button, a D pad, a touch panel, a mouse, and the like, and notifies the control unit 2001 of contents of screen operations performed by the user.

2005 is a communications unit. The communications unit 2005 uses a video image transmission protocol SRT and the like and is used when receiving video image data from the camera 1000, and each type of settings value, and the like via the network 3000, and when transmitting each type of setting value, confirmation responses, and the like. Note that although the communications unit 2005 uses SRT as the video image transmission protocol, the video image transmission protocol is not limited thereto.

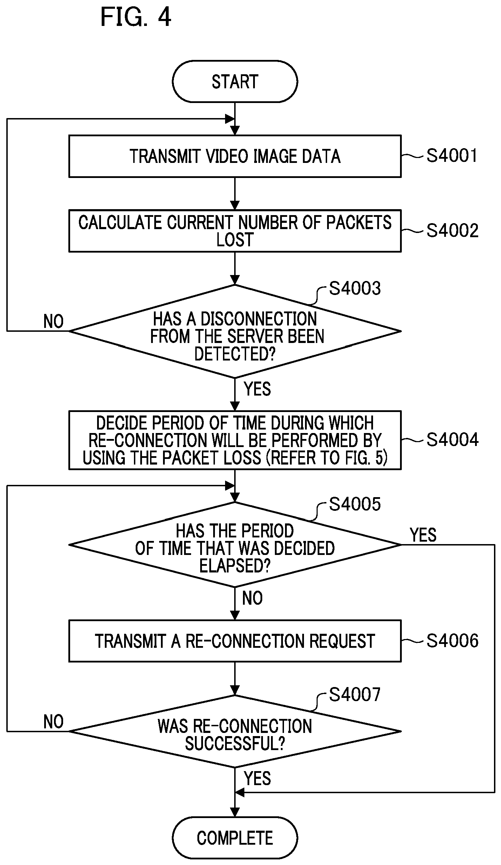

FIG. 4 is a flowchart showing an example of automatic re-connection processing using packet loss in the video image transmission according to the First Embodiment of the present disclosure. Note that the processes for each step of the flowchart in FIG. 4 are performed in order by the CPU and the like that serves as a computer inside of the camera 1000 executing a computer program that has been stored on the memory.

During step S4001, the camera 1000 performs video image transmission to the server apparatus 2000 at an arbitrary transmission bit rate. Note that in this context, the step S4001 functions as a transmission step (transmission unit) configured to transmit video image data to a transmission destination apparatus (an external apparatus) via a network. Next, during step S4002, the number of packets lost per a unit of time is calculated and stored using the SRT function.

During step S4003, a determination is performed as to whether or not a disconnection from the server has been detected. In a case in which a disconnection has not been detected, during step S4001, the transmission of video image data is performed. In a case in which a disconnection has been detected, during step S4004, a period of time for which re-connection will be periodically continued, and the like are decided using the packet loss.

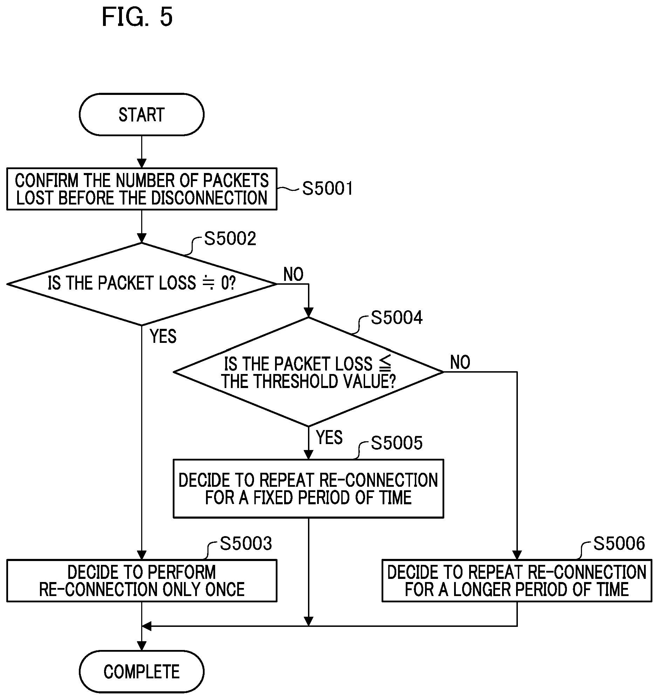

The processing for step S4004 will be explained below using the flowchart in FIG. 5. During step S4005, it is determined whether or not the time period and the like that was decided during step S4004 has elapsed. In a case in which the time period and the like that was decided has elapsed, although re-connection has not been successful, reconnection attempts are abandoned, and the automatic re-connection processing flow of FIG. 4 is completed. However, it is possible to re-start the automatic re-connection processing flow of FIG. 4 after this has been completed by the user performing an operation.

During step S4005, in a case in which it has been determined that the decided time period and the like has not elapsed, during step S4006, a re-connection request is transmitted. During step S4007, it is determined whether or not re-connection was successful. In a case in which re-connection was not successful, the processing returns to step S4005. In a case in which re-connection was successful, the automatic reconnection processing shown in FIG. 4 is completed.

FIG. 5 is flowchart showing an example of decision processing for a period of time during which transmission of re-connection requests using packet loss will be continued, and the like during step S4004. Note that the processes for each step of the flowchart in FIG. 5 are performed in order by the CPU and the like that serves as a computer inside of the camera 1000 executing the computer program that has been stored on a memory.

During step S5001, the number of packets lost before the disconnection, which was stored during step S4002, is confirmed. During step S5002, it is determined whether or not the number of packets lost is equal to or less than a predetermined value.

In a case in which the packet loss is equal to or less than a predetermined value, there is a high possibility that the cause of the disconnection was not the network load, and that disconnection happened due to the user performing a stopping operation, and therefore during step S5003, it is decided that re-connection will be performed just one time in order to lower the load to the server. However, in a case in which Yes has been determined during step S5002, it may also be made such that re-connection is not performed at all.

During step S5002, in a case in which it has been determined that the packet loss was greater than the above predetermined value, during step S5004, it is determined whether or not the packet loss is equal to or below a threshold value that was determined in advance. In a case in which the packet loss is equal to or below the predetermined threshold value, during step S5005, it is decided that re-connection will be repeated for a fixed time period. For example, a re-connection of 30 seconds is repeated at 5 second intervals.

In a case in which it has been determined during step S5004 that the packet loss was greater than the above predetermined threshold value, the network load at the time of disconnection was higher, and therefore, there is a high possibility that the disconnection was caused by the network load. That is, there is a high chance that the server is still waiting for connection, and therefore, during step S5006, it is decided that re-connection will be repeated for a longer time period. For example, a re-connection of 5 minutes is repeated at one second intervals.

If the network load is high, the recovery of the network can take time, and therefore, in the present embodiment successful re-connection is facilitated by repeating the re-connection for a longer time period. In this context, the above-described threshold value is a value for determining the level of the network load, and may also be a fixed value that has been decided in advance, or may also be dynamically decided during video image transmission such as by calculating an average value for the number of packets lost per each pre-determined time period, and making a value in which a predetermined numerical value has been added to or multiplied by this average value the threshold value, or the like.

That is, the threshold value that is used when comparing the load level with a predetermined threshold value may be a fixed value, or it may also be a value that has been dynamically decided according to the network conditions.

In addition, a plurality of thresholds may also be established for the threshold value during step S5004, a plurality of determinations may be made for the extent of the network load, and the re-connection time-period may be decided more precisely. That is, the level of the network load may also be determined in a plurality of stages by comparing the load level with a plurality of threshold values.

In this context, the above-described step S5002, and step S5004 function as a determining step (determining unit) configured to determine a load level of the network during communications with the transmission destination apparatus.

Note that along with or instead of deciding the time period during which reconnection will be performed (the re-connection time period), the interval at which reconnection is performed (the re-connection interval) may be made shorter, and the number of times that re-connection is performed per a predetermined time period (number of re-connections/re-connection frequency) may also be increased. That is, the larger that the load level is, the longer that the reconnection time period may be made, the shorter that the reconnection interval may be made, and the more the number of reconnections may be increased.

That is, in a case in which the load level is larger than the predetermined threshold value, it may be determined that the re-connection time period during which reconnection requests are repeated at a predetermined interval will be made longer. In addition, in a case in which the load level is larger than the pre-determined threshold value, it may be determined that the re-connection interval during which re-connection requests are repeated at a predetermined interval will be made shorter. In addition, in a case in which the load level is larger than the predetermined threshold value, it may also be determined that the number of times re-connection is performed per a pre-determined period of time will be increased.

Note that step S5003, S5005, S5006, and the like function as a decision step (decision unit) configured to decide at least one from among a re-connection time period, a re-connection interval, and a number of re-connections based on the load level at the time of disconnection in a case in which a disconnection has been detected for the connection with the transmission destination apparatus.

In addition, it is sufficient if a re-connection request is transmitted to the transmission destination apparatus during step S4006 of FIG. 4 based on at least one of the re-connection time period, the re-connection interval, and the number of times that re-connection will be performed that have been decided by the flow in FIG. 5. That is, step S4006 functions as a control step (control unit) configured to transmit a re-connection request to the transmission destination apparatus based on at least one of the re-connection time period, the re-connection interval, and the number of times that re-connection will be performed that have been decided.

As has been described above, in the present embodiment, the processing for deciding the time-period during which re-connection is performed determines that there is a high possibility that the cause of the disconnection was the network load when the number of packets lost before the disconnection was high, and increases at least one of the time period during which re-connection is performed, the interval at which reconnection is performed, and the amount of times that re-connection will be performed.

It is thereby possible to shorten the time period during which re-connection is performed and to lighten the load that is placed on the server when there is a high possibility that the user has performed a stopping operation. In contrast, it is possible to decrease the possibility of re-connection failing when there is a high possibility that the disconnection was caused by the network load by making the time period during which re-connection is continued longer, making the interval at which re-connection is performed shorter, or increasing the number of times (the frequency) at which reconnection is performed.

Note that for example, as the method for deciding the time period, interval, and number of times for the re-connection to be repeated, as well as the threshold value, and as the statistical information showing the load level for the network, instead of packet loss, another value such as the estimated bandwidth, ACK, NAK, round trip time, and the like may also be used.

For example, the load level is determined to be high the larger that the packet loss is. In a case in which packet loss has been used, it is possible to make the load level a value that is based on the number and volume of packets lost per a predetermined time. In addition, the load level is determined to be high the longer that the round trip time is.

In a case in which the round trip time is used, it is possible to use the round trip time itself or a value based on the round trip time as the load level. There are various methods for determining the extent of the load that is occurring during network communications. Therefore, it is possible to determine the load level for the network using these other various methods.

The load level may be decided based on at least one of the number of packets lost, the network bandwidth, the round trip time, and a response packet transmitted from the transmission destination apparatus. In addition, the video image transmission protocol is not limited to SRT and another protocol may also be used, and audio may also be transmitted together with the video image.

### <Second Embodiment>

Below, a video image transmission apparatus according to the Second Embodiment of the present disclosure will be explained with reference to FIGS. 1 to 3 and 6 to 8. Note that the network configuration in FIG. 1, the internal configuration of the camera 1000 in FIG. 2, and the internal configuration of the server apparatus 2000 in FIG. 3 are the same as those in the First Embodiment, and therefore, explanations thereof will be omitted.

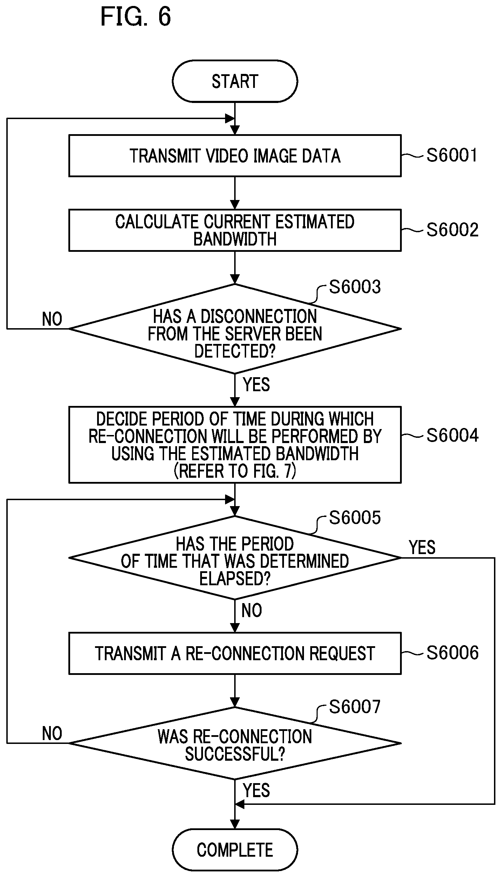

In the First Embodiment, the time period during which re-connection is performed was lengthened, the interval at which re-connection is performed was shortened, and the number of times re-connection will be performed per a pre-determined period of time (the frequency) was increased based on packet loss. In the present embodiment, FIG. 6, FIG. 7, and FIG. 8 will be used to explain a method for deciding the time period during which re-connection is performed using communications information that shows the network load other than packet loss.

FIG. 6 is a flowchart showing an example of automatic re-connection processing using an estimated bandwidth during video image transmission of the camera 1000 according to the Second Embodiment of the present disclosure.

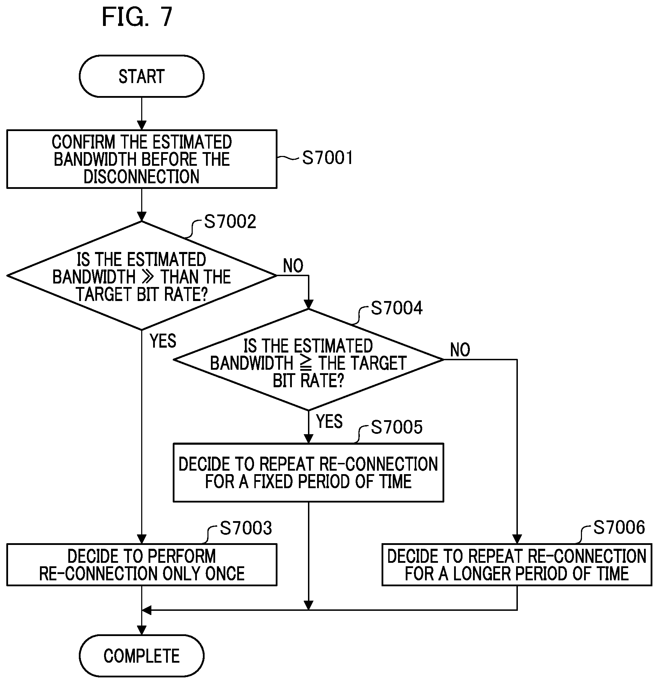

In addition, FIG. 7 is a flowchart showing an example of determination processing for a period of time during which re-connection requests are transmitted using an estimated bandwidth according to the Second Embodiment of the present disclosure.

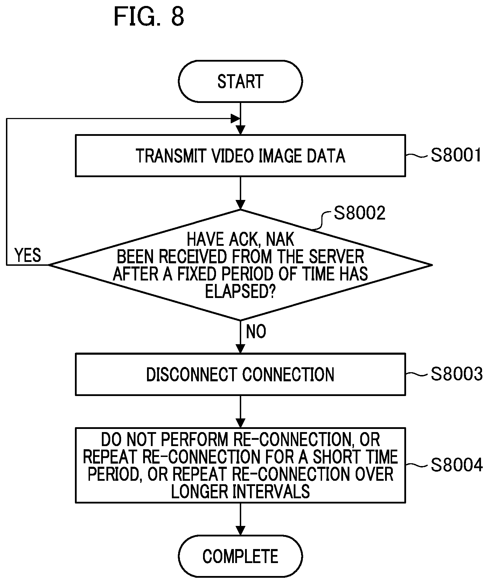

FIG. 8 is a flowchart showing an example of automatic re-connection processing using ACK, and NAK that are received from the server according to the Second Embodiment of the present disclosure.

Note that the processes for each step in the flowcharts from FIG. 6 to FIG. 8 are performed in order by the CPU and the like that serves as a computer inside of the camera 1000 executing a computer program that has been stored on the memory.

In FIG. 6, the processing for step S6001, step S6003, and step S6005 to step S6007 is the same as the processing for step S4001, step S4003, and step S4005 to step S4007 in the flowchart in FIG. 4, and therefore, explanations thereof will be omitted.

During step S6002, the current estimated bandwidth is measured, and stored. During step S6003, in the case in which a disconnect from the server has been detected, during step S6004, the time period during which re-connection will performed is decided using the estimated bandwidth that was estimated during step S6002.

An example of the processing for deciding the time period during which reconnection will be performed using the estimated bandwidth in step S6004 will be explained using the flowchart in FIG. 7. The processing for step S7003, step S7005, and step S7006 are the same as the processing for step S4003, step S4005, and step S4006 of the flowchart in FIG. 4, and therefore, explanations thereof will be omitted.

During step S7001, the estimated bandwidth at the time of the disconnection that was stored during step S6002 is confirmed. During step S7002, a determination is performed as to whether or not the estimated bandwidth was unusually larger than the target bit rate at the time of the disconnection. Specifically, it is determined whether or not the estimated bandwidth was larger than, for example, the target bit rate at the time of the disconnection × a predetermined value (a value that is larger than 1).

The target bit rate shows a target value for the bit rate for when the camera is attempting to transmit video image data. In a case in which the estimated bandwidth is unusually larger than the target bit rate, there is a high possibility that the disconnection occurred due to the user performing a stopping operation, not due to the network load, and therefore, during step S7003, it is decided that re-connection will be performed only one time in order to lower the load to the server. However, it may also be made such that re-connection is not performed.

In the case of No during step S7002, that is, in a case in which it has been determined that the estimated bandwidth was not unusually larger than the target bit rate, during step S7004, it is determined whether or not the estimated bandwidth was equal to or greater than the target bit rate at the time of the disconnection.

In a case in which the estimated bandwidth was equal to or greater than the target bit rate at the time of disconnection, during step S7005, it is decided that re-connection will be repeated for a fixed period of time. In contrast, in a case in which the estimated bandwidth was smaller than the target bit rate, this means that the network load was high at the time of the disconnection, and therefore, during step S7006, it is decided that reconnection will be repeated for a longer period of time than the time period that was decided during step S705. Conversely, it may also be decided that the interval at which re-connection is performed will be made shorter, and the number of times that (the frequency at which) re-connection is performed will be increased. These may also all be executed.

As has been explained above, in the present embodiment, during the automatic re-connection processing using the estimated bandwidth, the target bit rate at the time of the disconnection is made a threshold value, and the estimated bandwidth is compared therewith. The extent of the load on the network is thereby determined, and it is decided that at least one from among the time period during which re-connection is performed, the interval at which re-connection is performed, and the number of times that reconnection will be performed will be changed.

Next, an explanation of an example of automatic re-connection processing using ACK and NAK will be explained using the flowchart in FIG. 8.

During step S8001 of FIG. 8, the camera 100 performs video image transmission at an arbitrary transmission bit rate to the server apparatus 2000. During step S8002, after a predetermined period of time has elapsed, it is determined whether or not ACK, and NAK have been received from the server.

In a case in which ACK, and NAK have been received from the server, during step S8001, the transmission of video image data is performed. In a case in which ACK, and NAK have not been received from the server, during step S8003 the connection with the camera is disconnected. In this case, there has not been a response from the server for a predetermined period of time, and therefore, there is a high possibility that the server has been dropped, and connection is not being received.

Therefore, in order to decrease the load on the server, during step S8004, reconnection is not performed, or re-connection is repeated for a shorter period of time than usual, or re-connection is repeated at a longer interval than usual, and after this, the automatic re-connection processing flow in FIG. 8 is completed.

That is, in a case in which a response packet has not been transmitted from the transmission destination device for a pre-determined period of time before a disconnection is connected, during step S8004, reconnection is not performed, or the time period during which re-connection is continued is made shorter, or the time interval at which re-connection requests are transmitted is made longer.

However, the automatic re-connection processing flow in FIG. 8 is completed at the point in time in which re-connection is successful. Note that after the completion of the automatic re-connection processing flow in FIG. 8, in a case in which re-connection has failed, it is possible to re-start the automatic re-connection processing flow of FIG. 8 by a user operation. That is, when connection cannot be made to the transmission destination apparatus during the time period for which re-connection requests are transmitted, it is possible to start the processing for re-connection by a user operation.

As has been explained above, in the automatic re-connection processing using ACK and NAK according to the present embodiment, in a case in which ACK and NAK are not received from the server within a predetermined period of time, it is determined that the server has been dropped, and re-connection processing so as to decrease the load on the server is performed along with the disconnection of the connection so as to decrease the load on the server. It is thereby possible to decrease the load on the server that has been dropped.

Note that, it may also be made such that a different method for determining the time period, intervals, and number of times that the re-connection is repeated, as well as the threshold value, and different communications information is used as the value that represents the network load, or such that another response packet is used instead of ACK, and NAK, and the like. In addition, the video image transmission protocol is not limited to SRT, and a different protocol may also be used. In addition, audio may also be transmitted in addition to the video image.

In the Second Embodiment, a method of using estimated bandwidth, ACK, and NAK as the communications information that is used in the automatic re-connection processing during video image transmission was explained. It is thereby possible to shorten the period of time during which re-connection will be performed and lessen the load on the server when there is a high possibility that the user has performed a stopping operation.

In addition, it is possible to lengthen the period of time during which reconnection will be performed and to decrease the possibility of re-connection failing when there is a high possibility that the disconnection was caused by the network load. In addition, it is possible to not perform re-connection, to make the re-connection time period shorter, and to make the re-connection interval longer, and thereby decrease the load on the server when there is a high possibility that the server has been dropped.

While the present disclosure has been described with reference to embodiments, it is to be understood that the disclosure is not limited to the disclosed embodiments but is defined by the scope of the following claims.

In addition, as a part or the whole of the control according to the embodiments, a computer program realizing the function of the embodiments described above may be supplied to the video image transmission apparatus and the like through a network or various storage media. Then, a computer (or a CPU, an MPU, or the like) of the video image transmission apparatus and the like may be configured to read and execute the program. In such a case, the program and the storage medium storing the program configure the present disclosure.

In addition, the present disclosure includes those realized using at least one processor or circuit configured to perform functions of the embodiments explained above. For example, a plurality of processors may be used for distribution processing to perform functions of the embodiments explained above.

This application claims the benefit of priority from Japanese Patent Application No. 2024-145596, filed on August 27, 2024.

## Claims

1. A video image transmission apparatus comprising:
transmission means for transmitting video image data to an external apparatus via a network;
determination means for determining a load level on the network during communications with the external apparatus;
decision means for deciding, in a case in which the disconnection of the connection with the external apparatus has been detected, at least one from among a reconnection time period, a re-connection interval, and the number of times that reconnection will be performed, based on the load level at the time of the disconnection; and
control means for transmitting a re-connection request to the external apparatus based on the at least one.

2. The video image transmission apparatus according to claim 1, in a case in which the load level is larger than a predetermined threshold value, the decide means decides that the re-connection time period during which the re-connection requests are repeated at a predetermined interval will be made longer.

3. The video image transmission apparatus according to claim 1 or claim 2, wherein in a case in which the load level is larger than a predetermined threshold value, the decide means decides that the re-connection time period during which the reconnection requests are repeated at a predetermined interval will be made shorter.

4. The video image transmission apparatus according to any one of claims 1 to 3, wherein in a case in which the load level is larger than a predetermined threshold, the decide means decides that the number of times that re-connection will be performed per a predetermined time will be increased.

5. The video image transmission apparatus according to any one of claims 1 to 4, wherein the load level is decided based on at least one of a number of packets lost, a network bandwidth, a round trip time, and a response packet transmitted from the external apparatus.

6. The video image transmission apparatus according to any one of claims 1 to 5, wherein predetermined threshold value with which the load level is compared is a fixed value or a value that have been dynamically decided according to a state of the network.

7. The video image transmission apparatus according to claim 6, wherein the network load level is determined in a plurality of stages by comparing the load level with a plurality of the threshold values.

8. The video image transmission apparatus according to any one of claims 1 to 7, wherein the one or more processors further execute instructions to, in a case in which before the disconnection has been detected, a response packet has not been transmitted from the external apparatus for a pre-determined period of time, perform control so as to not perform re-connection.

9. The video image transmission apparatus according to any one of claims 1 to 8, wherein the one or more processors further execute instructions to, in a case in which before the disconnection has been detected, a response packet has not been transmitted from the external apparatus for a pre-determined period of time, control is performed to make the re-connection time period shorter

10. A video transmission method comprising:
transmitting video image data to an external apparatus via a network;
determining a load level of the network during communications with the external apparatus;
in a case in which a disconnection of the connection with the external apparatus has been detected, deciding, based on the load level at the time of the disconnection, at least one from among a re-connection time period, a re-connection interval, and a number of times that re-connection will be performed; and
transmitting a re-connection request to the external apparatus based on the at least one.

11. A computer program comprising instructions which, when the program is executed by a computer, cause the computer to carry out the method of claim 10.
